(19) Europäisches Patentamt European Patent Office Office européen des brevets

(11) **EP 4 470 862 A1**

(12) **EUROPEAN PATENT APPLICATION**
published in accordance with Art. 153(4) EPC

(43) Date of publication:
04.12.2024 Bulletin 2024/49

(21) Application number: 23707248.3

(22) Date of filing: 16.01.2023

(51) International Patent Classification (IPC):
B60W 40/06 (2012.01)    B60W 40/10 (2012.01)
B60W 50/14 (2020.01)    G06V 20/56 (2022.01)
B60R 11/04 (2006.01)    G08C 17/02 (2006.01)
G08G 1/0967 (2006.01)    B60W 50/00 (2006.01)

(52) Cooperative Patent Classification (CPC):
B60R 11/04; B60W 40/06; B60W 40/10;
B60W 50/00; B60W 50/14; G06V 20/56;
G08C 17/02; G08G 1/0967

(86) International application number:
PCT/KR2023/000732

(87) International publication number:
WO 2023/140579 (27.07.2023 Gazette 2023/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.01.2022 KR 20220006964

(71) Applicant: SRD Korea Co., Ltd.
Gyeongsan-si, Gyeongsangbuk-do 38648 (KR)

(72) Inventors:
• SHIN, Dong Hen
  Gyeongsan-si, Gyeongsangbuk-do 38648 (KR)
• SHIN, Min Sung
  Jeju-si, Jeju-do 63362 (KR)

(74) Representative: Schott, Jakob Valentin
Wuesthoff & Wuesthoff
Patentanwälte und Rechtsanwalt PartG mbB
Schweigerstraße 2
81541 München (DE)

(54) **CONTROL SYSTEM USING ROAD SURFACE RECOGNITION OF TRAVELING VEHICLE, AND METHOD THEREFOR**

(57) Provided are a control system CS using road surface recognition (e.g., recognition of hydroplaning or black ice) of a driving vehicle, and a method "M" using the same.

To this end, the control system CS using road surface recognition of a driving vehicle according to the present disclosure includes: a vehicle-attached device transmitting, to a central management server, road surface information including the real-time location information and road surface image information of a driving vehicle; and the central management server determining a road surface condition in real time based on the road surface information received from the vehicle-attached device and transmitting road surface condition information to the vehicle-attached device.

Accordingly, the vehicle-attached device attached to the driving vehicle may transmit the road surface information including the real-time location information and the road surface image information to the central management server, and the central management server may thus accurately determine the road surface condition by using the multiple road surface information provided in real time.

EP 4 470 862 A1

Fig. 1

CS

DATABASE (D)

CENTRAL MANAGEMENT
SERVER (200)

COMMUNICATION
NETWORK

100

A

110

**Description**

[Technical Field]

The present disclosure relates to a control system using road surface recognition (e.g., recognition of hydroplaning or black ice) of a driving vehicle and a method using the same, and more particularly, to a control system using road surface recognition of a driving vehicle, in which a vehicle-attached device transmits, to a central management server, road surface information including the real-time location information and road surface image information of the driving vehicle, and the central management server determines a road surface condition in real time to transmit road surface condition information to the vehicle-attached device, and a method using the same.

[Background Art]

In general, a driver may predict weather based on a regional weather forecast and prepare for driving safety. However, extreme weather events such as heavy guerrilla rains in summer and increased frequency of localized heavy snowfalls in winter in certain areas have appeared one after another in recent years due to a rapid change in a meteorological condition caused by global warming. Heavy rain or heavy snow caused by the extreme weather event may form a water film or cause freezing on a road surface to significantly reduce slip resistance of a tire, thus increasing a risk of a vehicle accident.

In addition, fog or dew condensation may occur depending on a temperature near the road surface when water vapor in the air is condensed due to a rapid temperature drop. Fog may not only threaten the driving safety by covering the driver's eyes, but also wet the road surface, and condensed moisture may threaten the driving safety by causing freezing as the temperature drops.

In particular, a difference of 4°C between an air temperature and a road surface temperature may occur in sections such as tunnel entrance and exit, a bridge section, a shade section, an accident-prone area, a connection road (e.g., interchange (IC), junction (JCT), service area) and a boundary section between branches. Therefore, many difficulties may arise in predicting a local road surface condition.

For this reason, public institutions, local governments, and related private organizations are making great efforts to build a safe road environment that may respond to unexpected weather conditions. For example, these organizations set a habitual freezing section to a salt water injection section to operate an injection device, or build variable message signs (VMS) displaying a road surface condition of a road on the road to transmit the road surface condition depending on a weather condition in real time.

However, more habitual freezing sections may exist in mountainous or suburban areas than in urban areas, and the drive may thus mostly go through an unfamiliar road. For this reason, the driver may completely rely on a vehicle navigator while driving. Therefore, the driver may have no choice but to drive the vehicle while having lower concentration on a safety sign or the variable message signs existing on the road. Accordingly, a case where the driver fails to cope with a change in a rapid curve of the road may be directly related to a big accident due to vehicle slippage in connection with the road surface condition.

Meanwhile, Korean Patent Laid-Open Publication No. 10-2009-0022127 (published on March 4, 2009, hereinafter referred to as 'Related art document 1') discloses "System and method for road health monitoring using mobile communication and wireless communication."

Related art document 1 suggests that a driver is provided with measured road condition data by using mobile communication and wireless communication by measuring a road condition by using an economical and inexpensive sensor. However, it is impossible to install the sensors in all areas of a road, and the sensors may thus only selectively measure some dangerous sections. In addition, the sensor is intended to measure a weather condition, and it is thus difficult to accurately predict a road surface condition which has a significant error from an air temperature.

On the other hand, proposed is Japanese Patent Laid-Open Publication No. 2018-025528 (published on February 15, 2018, hereinafter referred to as 'Related art document 2') entitled "Detection device, detection method and detection program."

The related art document 2 is proposed to determine a state of an object, including a road surface, by emitting incident light of a specific wavelength range to a driving vehicle and analyzing a wavelength of reflected light reflected or scattered from the object. However, as a road surface condition is recognized using the specific driving vehicle, an excessive error may be caused in the identification of the road surface condition depending on a condition of a camera or an irradiation angle of the incident light, and road surface condition information may not be shared in real time with another driving vehicle.

Furthermore, in the related art document, the driver may not immediately recognize the road surface condition, and even though the driver recognizes the condition, a safety accident may still occur due to driver negligence or a change in a local road surface condition.

[Disclosure]

[Technical Problem]

An object of the present disclosure is to provide a control system using road surface recognition (e.g., recognition of hydroplaning or black ice) of a driving vehicle, which may accurately determine a road surface condition by using multiple road surface information provided in real time from the plurality of driving vehicles, alert a driver by displaying road surface condition information, including hydroplaning or black ice, as voice information or visual information, and allow the vehicle to control driving information on its own even with the driver's negligence, and a method using the same.

[Technical Solution]

According to an embodiment of the present disclosure, a the control system CS using road surface recognition (e.g., recognition of hydroplaning or black ice) of a driving vehicle may include: a vehicle-attached device 100 transmitting, to a central management server 200, road surface information "d" including the real-time location information and road surface image information of a driving vehicle "A"; and the central management server 200 determining a road surface condition in real time based on the road surface information "d" received from the vehicle-attached device 100 and transmitting road surface condition information to the vehicle-attached device 100.

In addition, the vehicle-attached device 100 may include an image capture unit 110 attached to the driving vehicle "A" and continuously capturing the road surface image information; a global positioning system (GPS) unit 120 recognizing location information of a road surface captured by the image capture unit 110 in real time; a data packaging unit 130 packaging the real-time location information and road surface image information of the driving vehicle "A"; a data transmission/reception unit 140 transmitting the packaged road surface information "d" to the central management server 200 and receiving the real-time road surface condition information from the central management server 200; and a display unit 150 visually outputting the real-time road surface condition information.

In addition, the vehicle-attached device 100 may include a drive control unit 160 controlling driving information of the vehicle "A" based on the real-time location information, based on the road surface condition information received from the central management server 200.

In addition, the central management server 200 may include a feature vector extraction unit 210 extracting a feature vector based on the transmitted real-time road surface information "d," a road surface condition determination unit 220 determining the road surface condition by extracting the real-time feature vector extracted by the feature vector extraction unit 210 and a feature vector of a dry road surface, a wet road surface, an iced road surface, or a snowy road surface, stored in a database "D," and calculating similarity between the feature vectors, and a communication unit 240 transmitting the determined real-time road surface condition information to the vehicle "A" and receiving the road surface information "d" from the driving vehicle "A."

In addition, the road surface condition determination unit 220 may determine the road surface condition based on a predetermined length L by determining a local road surface condition in units of 1 m or less, and verifying validity of the accumulated local road surface conditions for the predetermined length L.

In addition, the road surface condition determination unit 220 may verify the validity based on reliability of the road surface information "d" received from the plurality of vehicles "A."

In addition, the central management server 200 may further include an image conversion unit 230 converting the determined real-time road surface condition information to be displayed as image information on a driving route map.

According to another embodiment of the present disclosure, a control method using road surface recognition of a driving vehicle may include: transmitting road surface information (S10) of transmitting, by a vehicle-attached device 100, road surface information "d" including the real-time location information and road surface image information of a driving vehicle "A" to a central management server 200; determining a road surface condition (S20) of determining, by the central management server 200, the road surface condition in real time based on the road surface information "d"; transmitting the road surface condition (S30) of transmitting, by the central management server 200, the determined road surface condition information to the vehicle-attached device 100.

In addition, the transmitting of the road surface information (S10) may include continuously capturing, by the vehicle-attached device 100, the road surface image information and recognizing the location information (S11), and packaging, by the vehicle-attached device 100, the real-time location information and road surface image information of the driving vehicle "A" (S12), and transmitting, by the vehicle-attached device 100, the packaged road surface information "d" to the central management server 200 (S13).

In addition, the determining of the road surface condition (S20) may include extracting, by the central management server 200, a feature vector based on the received real-time road surface information "d" (S21), determining, by the central management server 200, the road surface condition by calculating similarity between the extracted real-time feature vector and a feature vector of a dry road surface, a wet road surface, a iced road surface, or a snowy road surface, stored in a database "D" (S22), and converting, by the central management server 200, the determined real-time road surface condition information to be displayed as image information on a driving route map (S24).

In addition, the method may further include controlling driving (S40) of controlling, by the vehicle-attached device 100, driving information of the vehicle "A" based on the real-time location information, based on the received road surface condition information after the transmitting of the road surface condition (S30).

[Advantageous Effects]

As set forth above, in the control system CS using the road surface recognition (e.g., recognition of the hydroplaning or black ice) of a driving vehicle and the method "M" using the same according to the present disclosure, the vehicle-attached device attached to the driving vehicle may transmit the road surface information including the real-time location information and the road surface image information to the central management server, and the central management server may thus accurately determine the road surface condition by using the multiple road surface information provided in real time.

It is also possible to accurately recognize the road surface condition for each location without any error by packaging the real-time location information and road surface image information of the driving vehicle.

Further, the road surface condition determination unit may reduce possibility of error in determining the road surface condition by verifying the validity of the local road surface condition based on the reliability of the road surface information received from the plurality of vehicles.

In addition, the image conversion unit may convert the determined real-time road surface condition information to be displayed as the image information on the driving route map and visually provide the road surface condition information to the driver, thereby arousing the driver alertness, and provide the voice information if necessary.

In addition, the drive control unit may control the driving information such as the vehicle speed, gear ratio, and driving mode on its own based on the real-time location information, based on the transmitted road surface condition information. Accordingly, the improved driving safety may be expected.

In the embodiments, the road surface condition verification unit may significantly reduce the possibility of error by comprehensively considering the temperature/humidity information and the road surface image information, and the more accurate road surface condition determination may be expected.

[Description of Drawings]

FIGS. 1 and 2 are block diagrams each showing an overall configuration of a control system using road surface recognition of a driving vehicle according to an embodiment of the present disclosure.

FIG. 3 is a conceptual diagram for explaining a configuration of a vehicle-attached device according to an embodiment of the present disclosure.

FIG. 4 is a conceptual diagram for explaining an overall configuration of a central management server according to an embodiment of the present disclosure.

FIGS. 5A and 5B are a conceptual diagram showing an image capture unit and image information thereof according to an embodiment of the present disclosure.

FIG. 6 is a conceptual diagram for explaining a probabilistic distribution of luminance components used by a road surface condition determination unit according to an embodiment of the present disclosure.

FIG. 7 is an image displaying road surface condition information on a driving route map according to an embodiment of the present disclosure.

FIG. 8 is a block diagram time-sequentially showing a control method using road surface recognition of a driving vehicle according to another embodiment of the present disclosure.

[Best Mode for Invention]

Hereinafter, embodiments of the present disclosure are described in more detail with reference to the accompanying drawings. The embodiments of the present disclosure may be variously modified, and the scope of the present disclosure should not be construed as being limited to the following embodiments. The embodiments are provided to more fully explain the present disclosure to those skilled in the art.

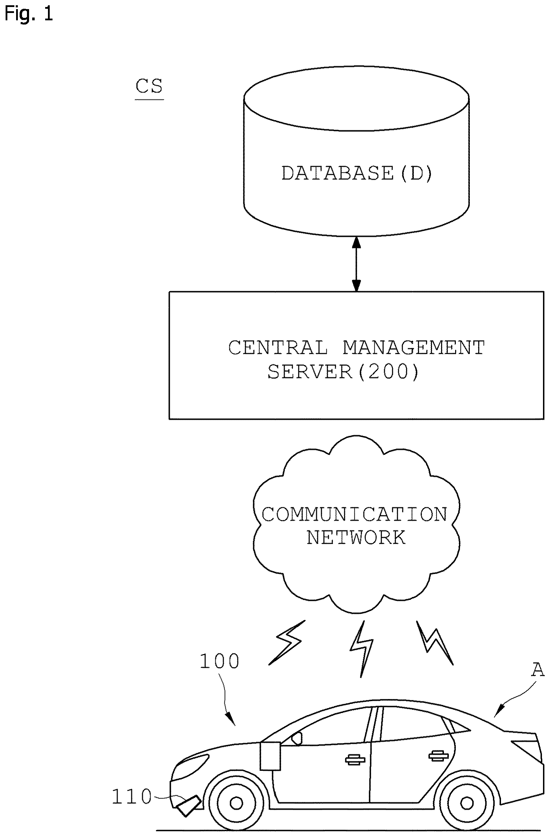

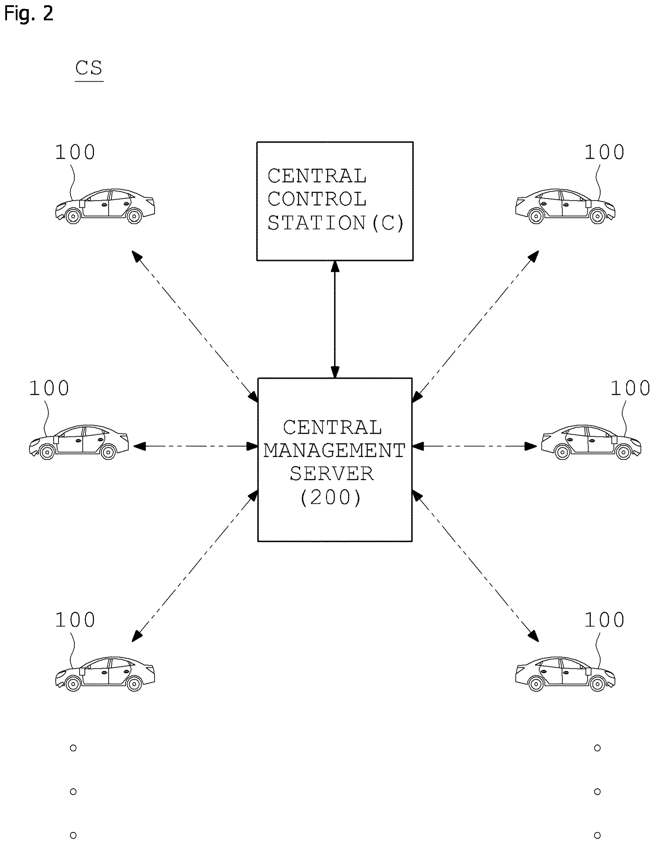

As shown in FIG. 1, a control system CS using road surface recognition (e.g., recognition of hydroplaning or black ice) of a driving vehicle according to the present disclosure may determine a road surface condition by using road surface information "d" including real-time location information and road surface image information obtained from a driving vehicle "A," and then transmit determined road surface condition information back to the driving vehicle "A." As shown in FIG. 2, the control system CS may receive the road surface information "d" from the plurality of vehicles "A" and determine the road surface condition. Accordingly, the road surface condition may be accurately determined, and the plurality of driving vehicles "A" may share the road surface condition information with each other.

To this end, the control system CS using road surface recognition (e.g., recognition of hydroplaning or black ice) of a driving vehicle according to the present disclosure may include a vehicle-attached device 100 and a central management server 200. In addition, the control system CS may include a database "D" including road surface image information of each accumulated location received from the plurality of vehicles "A" and a corresponding feature vector, and the database "D" may include accumulated air temperature/humidity information for each location according to an embodiment.

Here, the database "D," the vehicle-attached device 100, and the central management server 200 may transmit and receive information with one another through a communication network, and the communication network for connecting the devices with one another may use an internal network, a wired/wireless internet, long term evolution (LTE), long range radio (LoRa) communication using a sensor node, or the like. However, the vehicle-attached device 100 may be attached to the vehicle "A" and moved in real time, and it is thus preferable that the vehicle-attached device 100 and the central management device 200 transmit and receive the information through a mobile communication network.

Hereinafter, the description describes in detail each component included in the control system CS using road surface recognition (e.g., recognition of hydroplaning or black ice) of a driving vehicle according to the present disclosure.

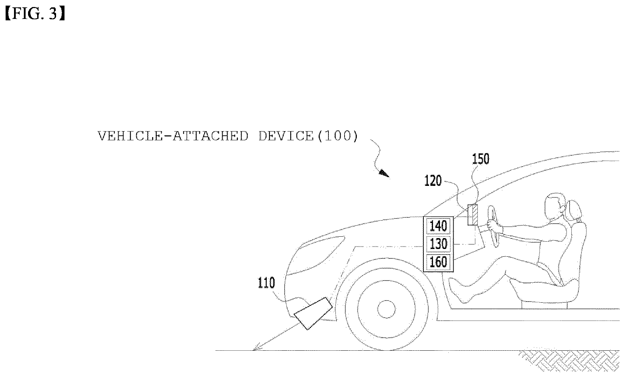

The vehicle-attached device 100 may be a device transmitting, to the central management server 200, road surface information "d" including real-time location information and road surface image information of the driving vehicle "A," and include an image capture unit 110, a global positioning system (GPS) unit 120, a data packaging unit 130, a data transmission/reception unit 140, and a display unit 150, as shown in FIG. 3. The vehicle-attached device 100 may be mounted in a vehicle as a separate component, and may communicate with the central management server 200 by being linked with a driver's portable terminal.

Here, it is assumed that the vehicle-attached device 100 described in the specification of the present disclosure has a central processing unit and a memory, and the described '~unit' indicates 'a block configured to change or plug in a hardware or software system,' that is, a unit or block that performs a specific function in hardware or software.

The image capture unit 110 may be attached to the driving vehicle "A" and continuously capture the road surface image information along a driving route, and preferably set to capture a specific area hardly affected by direct sunlight or reflected light.

Meanwhile, according to a preferred embodiment of the road surface condition determination unit 220 described below, the road surface condition determination unit 220 may use the luminance component distribution to predict the road surface condition information, and an external factor affecting color and brightness values may thus need to be excluded to obtain the pure road surface image information. Therefore, the image capture unit 110 may need to be installed in a place where interference caused by reflection or the like of a nearby object on a road is minimized. In addition, the image capture unit 110 may need to have no light interference or shading from the outside, and encounter no direct sunlight.

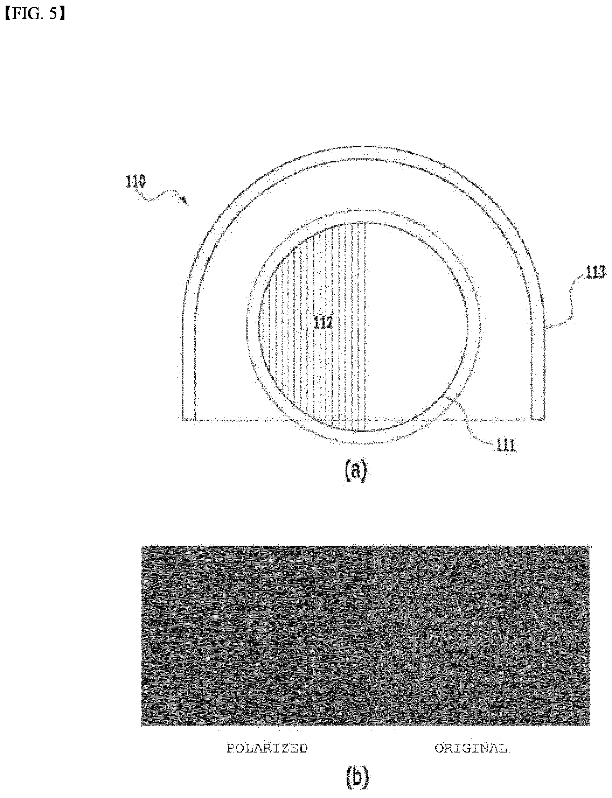

For this reason, as shown in FIG. 5A, the image capture unit 110 may include a sunshade 113 so that ventilation is as good as possible, and a lot of sunlight is absorbed while the direct sunlight is blocked. It is preferable that the sunshade 113 covers three sides of front and left and right camera lenses 111 of the vehicle so that the direct sunlight is blocked regardless of a direction of the driving vehicle "A."

Meanwhile, in the road surface image information captured by the image capture unit 110, the reflected light or shadows may occur by light, and unlike the original color, brightness, and shape, the color, brightness, or shape may be differently recognized due to distortion. For example, road surface condition recognition may be interfered with not only cloudy days, but also clouds on a sunny day in addition to various other factors such as light reflection, vehicle lights at night, and refraction. Therefore, various distortions due to the reflection or refraction may occur on a wet road, an iced road, a snowy road, and the like, and a polarization filter 112 may thus be used in a front side of the lens 111 to suppress these errors.

It is preferable that the polarization filter 112 is a horizontal polarization filter, and reflected light having a polarization component in a vertical direction may be removed from light passing through the horizontal polarization filter, thereby suppressing a glaring problem and increasing contrast of objects. As such, the polarization filter 112 may be used to make the object clear by removing unnecessary external reflected light or to remove reflected light from a glossy surface.

However, as shown in FIG. 5A, the polarization filter 112 may be positioned only on one front side of the lens 111 of the image capture unit 110 in the present disclosure. According to the above-described embodiment, as shown in FIG. 5B, the image capture unit 110 may simultaneously capture road surface image information that is polarized by the polarization filter 112 and non-polarized original road surface image information.

During daytime, the light reflection may increase brightness of a road surface, and in rainy weather, the brightness of the road surface may be lower than its actual brightness due to reflected light of a nearby dark object. Accordingly, the present disclosure may simultaneously secure the polarized road surface image information and the non-polarized original road surface image information based on the polarization filter 112 installed in the front side of the camera lens 111 to suppress the distortion and interference of the image information that is caused by an external environment, and the road surface condition determination unit 220 described below may determine the road surface condition information by comparing the luminance component distributions of the respective information or by comparing moment components through multi-dimensional small field segmentation.

Meanwhile, the GPS unit 120 may recognize real-time GPS location information of the driving vehicle "A," and continuously recognize the location information of the road surface captured by the image capture unit 110 in real time. As shown in FIG. 2, a geographic information system GIS that converts location coordinates received from satellites into a place name by using a global positioning system (GPS) and transmits the same may be required to provide the location information of the individual vehicle "A."

Here, as the road surface information "d," the data packaging unit 130 may co-package the real-time location information of the driving vehicle "A" that is recognized by the GPS unit 120 and the road surface image information captured by the image capture unit 110.

The data transmission/reception unit 140 may then transmit the packaged road surface information "d" to the central management server 200 and receive the real-time road surface condition information from the central management server 200. As described above, the data transmission/reception unit 140 may exchange the information in real time by using the mobile communication network despite a continuous location change of the vehicle "A," and may be the portable terminal of the driver.

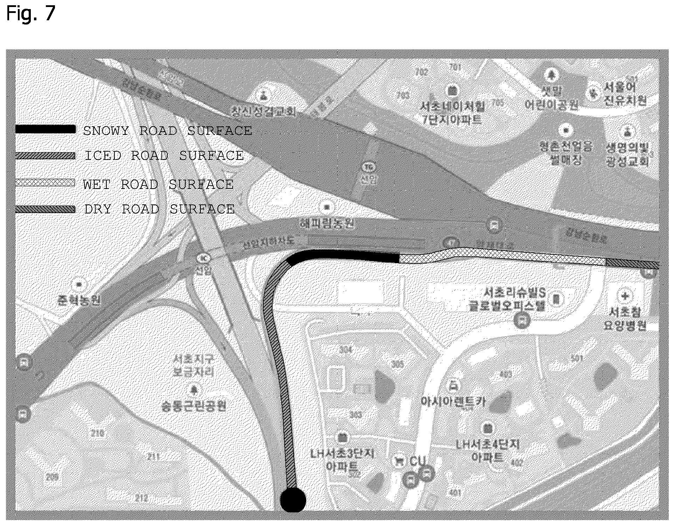

In addition, the display unit 150 may visually output the real-time road surface condition information. According to an embodiment, as shown in FIG. 7, the display unit 150 may be implemented to display a 'snowy road surface', an 'iced road surface', a 'wet road surface' or a 'dry road surface' in a specific color on a driving route map based on the road surface condition information determined in real time. In addition, the display unit 150 may call the driver's attention by providing road condition information as voice information together with or separately from visual information.

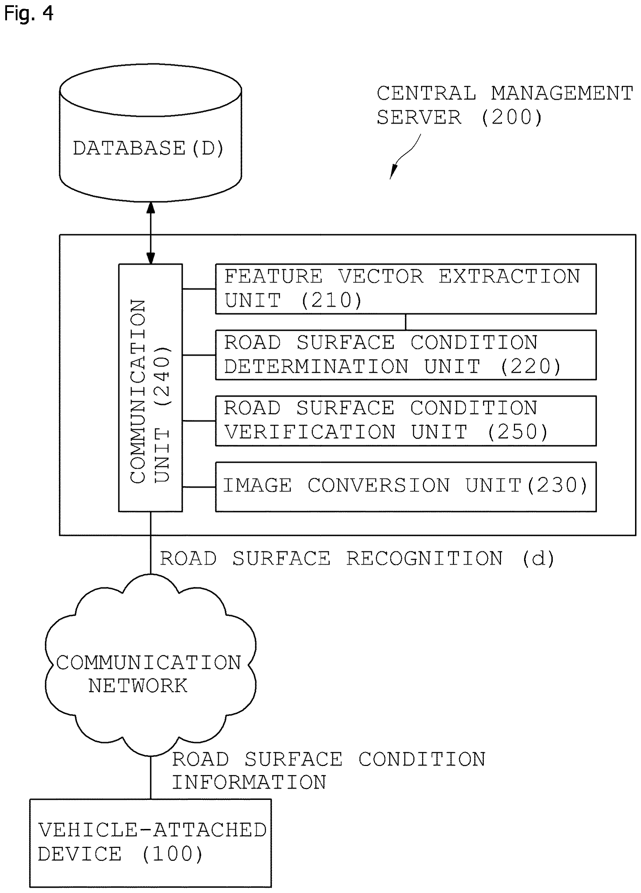

Meanwhile, the central management server 200 may determine the road surface condition in real time based on the road surface information "d" received from the vehicle-attached device 100, and transmit the road surface condition information to vehicle-attached device 100. As shown in FIG. 4, the central management server 200 may include a feature vector extraction unit 210, a road surface condition determination unit 220, an image conversion unit 230, and a communication unit 240. In addition, as shown in FIG. 2, the central management server 200 may be positioned in a central control station C to monitor and manage the road surface condition information in real time.

The feature vector extraction unit 210 may extract a feature vector based on the transmitted real-time road surface information "d." In addition, the road surface condition determination unit 220 may determine the road surface condition by extracting the real-time feature vector extracted by the feature vector extraction unit 210 and a feature vector of the dry road surface, the wet road surface, the iced road surface, or the snowy road surface, stored in the database "D," and calculating similarity between the feature vectors.

In more detail, the feature vectors of the road surface image information that the road surface condition determination unit 220 compares may be based on the luminance component distributions in the road surface image information that pass through the polarization filter 112 and the multi-dimensional small field segmentation for analyzing a texture in the road surface image information.

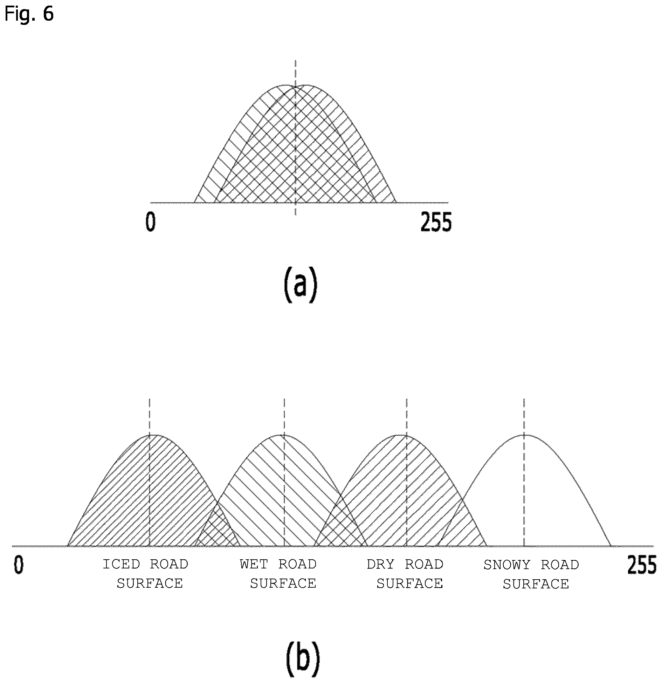

FIG. 6 is a conceptual diagram for explaining a probabilistic distribution of luminance components (or luminance component distribution) used by the road surface condition determination unit according to an embodiment of the present disclosure. When a road surface image is analyzed on the premise of an environment in which the image distortion such as the light reflection or shadow is low, probabilistic distribution of the road surface luminance components under the same road surface condition may not be widely dispersed as shown in FIG. 6A.

On the other hand, when comparing the probabilistic distributions of the luminance components in different road surface conditions with each other, a horizontal shift in the distribution occurs as shown in FIG. 6B. The road surface condition may be determined using the luminance component as a feature vector by using this property. More precisely, the minimum commonality between the luminance component distribution of the obtained road surface image information and the luminance component distributions stored in the database "D" may be defined as the feature vector and extracted to obtain similarity in the luminance component distributions.

Meanwhile, in an embodiment, the feature vector extraction unit 210 may extract an average value of the feature vectors for each wavelength range to prevent an error from occurring due to a foreign material or contamination of the local road surface, and the road surface condition determination unit 220 may also calculate the average value of the feature vector for each wavelength range and the similarity with the feature vector stored in the database "D."

The feature vector extraction unit 210 may extract a statistical moment vector of the luminance component distribution in the road surface image information, and additionally extract, as the feature vector, i.e. the feature vector for each wavelength, a moment vector $((h_\mu, h_\sigma^{LL}), (h_\mu, h_\sigma^{LH}), (h_\mu, h_\sigma^{HL}), (h_\mu, h_\sigma^{HH}))$ of a low-pass area or a high-pass area based on the multi-dimensional small field segmentation for the luminance component distribution.

Hereinafter, the moment vector may be represented by $m(LL^n, LH^n, HL^n, HH^n)$ (here, "n" is the order of a wavelet transform step).

In an embodiment, the feature vector extraction unit 210 may subdivide image information in block units, divide areas of the image information into M×M block units based on a Daubechies wavelet filter, and locally perform wavelet transform. Assuming that an n-th step wavelet transform is performed in each block B, an angular moment for a sub-band direction may be calculated as follows and normalized to a representative value of an entire space to be calculated as a feature vector value of a total wavelet moment for a sample.

$$\mu_m^n[B] = \frac{1}{|B|} \sum_{x,y \in B} |W_m^n(x,y)|$$

$$\sigma_m^n[B] = \sqrt{\frac{1}{|B|} \sum_{x,y \in B} (|W_m^n(x,y)| - \mu_m^n)^2}$$

In addition, the road surface condition determination unit 220 may provide more accurate road surface condition information by additionally calculating the similarity between the divided moment vector and the moment feature vector stored in the database "D." It is preferable to calculate the feature vectors obtained in an embodiment as the absolute sum of L2 distance functions for the respective components and compare the similarity between the feature vectors.

Meanwhile, more reflections may occur on the 'wet road surface' or the 'iced road surface' than on the 'dry road surface' during the daytime, while on the other hand, more reflection may occur on the 'dry road surface' at nighttime. Therefore, the polarized road surface image information and the original road surface image information may show different aspects with respect to the nearby light reflections or the like.

Accordingly, as shown in FIG. 5, in an embodiment in which the image capture unit 110 simultaneously captures the polarized road surface image information and the non-polarized original road surface image information, a weight to the 'iced road surface' or the 'wet road surface' may be increased when the mean square error MSE is calculated for the two image information and a difference in the luminance component distribution is relatively large based on this calculation.

In an embodiment, the MSE may be calculated as

$$MSE = \frac{1}{mn} \sum_{i=0}^{n-1} \sum_{j=0}^{m-1} [B(i,j) - P(i,j)]^2$$

as the mean square error for luminance for two areas "B" and "P" each having a size $m \times n$ as two adjacent areas in the original road surface image information and the polarized road surface image information. When $M_1$ and $M_2$ are defined as the average brightness values of the respective areas, a degree of an error occurring in these two areas that is caused by the light reflection or the like may be calculated as $10\log_{10}(M_1 M_2 / MSE)$. When the calculated value exceeds a predetermined specific value compared to an average value for a corresponding road surface group, this value may be recognized as the error, and the road surface condition determination unit 220 may withhold the determination.

Meanwhile, the road surface condition determination unit 220 may determine the road surface condition based on a predetermined length L by determining a local road surface condition in units of 1 m or less, and verifying validity of the accumulated local road surface conditions for the predetermined length L. Here, in verifying the validity, the road surface condition determination unit 220 may analyze the original road surface image information and the polarized road surface image information to determine whether the error occurs, as described above, and derive the road surface condition in units of the predetermined length L based on the continuity and quantification of local image information of 1 m or less for which the validity is recognized.

The road surface condition determination unit 220 may verify the validity based on reliability of the road surface information "d" received from the plurality of vehicles "A." For example, the road surface condition determination unit 220 may process the corresponding location information as the valid road surface condition information by recognizing the reliability when the image information corresponding to the location information less than a certain distance is accumulated N times or more within a set time based on the road surface information "d" in which the location information and the image information are packaged.

Meanwhile, the image conversion unit 230 may convert the real-time road surface condition information determined by the road surface condition determination unit 220 to be displayed as the image information on the driving route map, and visually output the real-time road surface condition information to the driver through the display unit or a navigation device, integrally formed in the vehicle "A," or a display unit 150 of another portable terminal. According to an embodiment, as shown in FIG. 7, the 'snowy road surface', the 'iced road surface', the 'wet road surface' or the 'dry road' may be displayed in the specific color on the driving route map based on the road surface condition information determined in real time.

In addition, the communication unit 240 may transmit the determined real-time road surface condition information to the vehicle "A" and receive the road surface information "d" from the driving vehicle "A," and transmit and receive the road surface condition information and the road surface information "d" via a base station for implementing long-distance communication.

Meanwhile, in an embodiment of the present disclosure, the vehicle-attached device 100 may include a drive control unit 160 controlling driving information of the vehicle "A" based on the real-time location information, based on the road surface condition information received from the central management server 200.

The drive control unit 160 may be an electronic control unit (ECU) or a micro controller unit (MCU), positioned in the vehicle "A," and control the vehicle speed, gear ratio, driving mode, or the like on its own as the driving information of the vehicle "A" based on the road surface condition information received from the central management server 200. Accordingly, improved driving safety may be expected.

In an embodiment, in implementing a cruise control, the drive control unit 160 may secure the driving safety even with the driver's momentary negligence by maintaining the driving speed set by the driver in the case of the 'dry road surface', and automatically controlling the driving speed to a predetermined driving speed for each road surface condition in the case of the 'snowy road surface', the 'iced road surface' or the 'wet road surface'.

Meanwhile, the central management server 200 according to the present disclosure may further include a road surface condition verification unit 250. The road surface condition verification unit 250 may additionally verify the road surface condition information determined by comprehensively considering the temperature/humidity information and the road surface image information.

The road surface condition verification unit 250 may additionally verify the road surface condition information determined by the road surface condition determination unit 220 by including the real-time temperature/humidity information provided by the driving vehicle "A" in the temperature/humidity information in the road surface information "d" based on the temperature/humidity information, the location information, and the road surface image information, received from the vehicle-attached device 100.

Main factors of road surface freezing in winter may be the condensed moisture and temperature of the road surface. The road surface condition verification unit 250 may thus additionally verify the road surface condition information by estimating a dew point temperature based on the temperature/humidity information received from each driving vehicle "A" and comparing the real-time temperature with the dew point temperature.

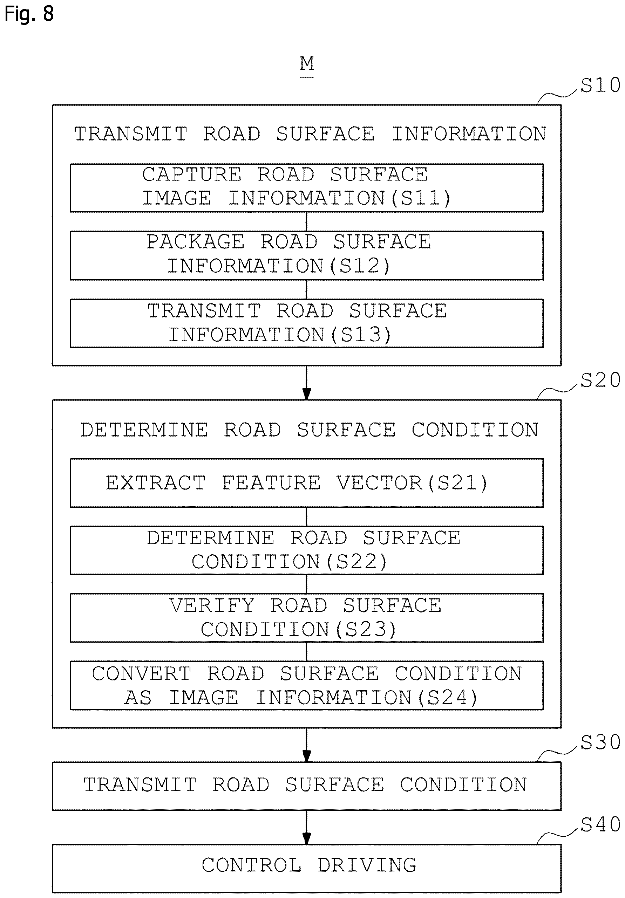

Hereinafter, the description describes the control method "M" using road surface recognition (e.g., recognition of hydroplaning or black ice) of a driving vehicle according to the present disclosure. As shown in FIG. 8, the control method "M" using road surface recognition of a driving vehicle according to the present disclosure is to determine a road surface condition by using road surface information "d" including real-time location information and road surface image information, obtained from a driving vehicle "A," and then transmit the determined road surface condition information back to the driving vehicle "A." The method may include transmitting road surface information (S10), determining the road surface condition (S20), and transmitting the road surface condition (S30).

The transmitting of the road surface information (S10) is a step of transmitting, by a vehicle-attached device 100, the road surface information "d" including the real-time location information and road surface image information of the driving vehicle "A" to a central management server 200.

In detail, an image capture unit 110 of the vehicle-attached device 100 may continuously capture the road surface image information from the driving vehicle "A," and simultaneously, a global positioning system (GPS) unit 120 may recognize the location information of the captured road surface (S11).

A packaging unit 130 of the vehicle-attached device 100 may then package the real-time location information and road surface image information of the driving vehicle "A" to match each other (S12), and a data transmission/reception unit 140 of the vehicle-attached device 100 may transmit the packaged road surface information "d" to the central management server 200 (S13).

Meanwhile, the determining of the road surface condition (S20) is a step of determining, by the central management server 200, the road surface condition in real time based on the road surface recognition (d).

In more detail, a feature vector extraction unit 210 of the central management server 200 may extract a feature vector based on the real-time road surface information "d" received from the vehicle-attached device 100 (S21). A road surface condition determination unit 220 of the central management server 200 may determine the road surface condition by extracting the extracted real-time feature vector and a feature vector of a dry road surface, a wet road surface, a iced road surface, or a snowy road surface, stored in a database "D," and calculating similarity between the feature vectors (S22).

In another embodiment, a road surface condition verification unit 250 of the central management server 200 may additionally verify the road surface condition information determined by comprehensively considering temperature/-humidity information and the road surface image information (S23).

The road surface condition verification unit 250 may additionally verify the road surface condition information determined by the road surface condition determination unit 220 by including the real-time temperature/humidity information provided by the driving vehicle "A" in the temperature/humidity information in the road surface information "d" based on the temperature/humidity information, the location information, and the road surface image information, received from the vehicle-attached device 100.

In addition, an image conversion unit 230 of the central management server 200 may convert the determined real-time road surface condition information to be displayed as image information on a driving route map through a display unit attached to the driving vehicle "A" (S24).

The transmitting of the road surface condition (S30) is a step of transmitting, by a communication unit 240 of the central management server 200, the determined road surface condition information to the vehicle-attached device 100, wherein the display unit 150 of the vehicle-attached device 100 outputs the road surface condition information transmitted in real time as visual information or voice information.

As shown in FIG. 7, the display unit 150 may be implemented to display a 'snowy road surface', an 'iced road surface', a 'wet road surface' or a 'dry road surface' in a specific color on the driving route map based on the road surface condition information determined in real time, or call a driver's attention by providing the road condition information as the voice information.

In addition, in another embodiment, the method may further include controlling driving (S40) of controlling, by the vehicle-attached device 100, driving information of the vehicle "A" based on the real-time location information, based on the received road surface condition information after the transmitting of the road surface condition (S30).

A drive control unit 160 of the vehicle-attached device 100 may be an electronic control unit (ECU) or a micro controller unit (MCU), positioned in the vehicle "A," and control the vehicle speed, gear ratio, driving mode, or the like on its own as the driving information of the vehicle "A" based on the road surface condition information received from the central management server 200. The drive control unit 160 may implement cruise control to control the speed.

Technical contents have been illustrated and described hereinabove with a focus on the embodiments of the present disclosure that relate to the control system (CS) using the road surface recognition (e.g., recognition of hydroplaning or black ice) of the driving vehicle and the method "M" using the same. However, the present disclosure may be variously modified or altered by those skilled in the art to which the present disclosure pertains by adding, changing, deleting, or supplementing the components without departing from the scope and spirit of the present disclosure as disclosed in the accompanying claims. These modifications should also be understood to fall within the scope of the present disclosure.

Further, in describing the embodiments of the present disclosure, omitted is a detailed description of a case where it is decided that the detailed description for the known functions or configurations related to the present disclosure may unnecessarily obscure the gist of the present disclosure. Furthermore, the terms used herein are defined in consideration of the functions in the embodiments of the present disclosure, and may be construed in different ways by intentions of users or operators, practices, or the like. Therefore, the terms should be defined on the basis of the contents throughout the specification. Therefore, the detailed description of the present disclosure described above is not intended to limit the present disclosure to the disclosed embodiments, and the appended claims should be construed to include other embodiments as well.

**Claims**

1. A control system using road surface recognition of a driving vehicle, the system comprising:

   a vehicle-attached device 100 transmitting, to a central management server 200, road surface information "d" including the real-time location information and road surface image information of a driving vehicle "A"; and
   the central management server 200 determining a road surface condition in real time based on the road surface information "d" received from the vehicle-attached device 100 and transmitting road surface condition information to the vehicle-attached device 100.

2. The system of claim 1, wherein the vehicle-attached device 100 includes

   an image capture unit 110 attached to the driving vehicle "A" and continuously capturing the road surface image information;
   a global positioning system (GPS) unit 120 recognizing location information of a road surface captured by the image capture unit 110 in real time;

EP 4 470 862 A1

a data packaging unit 130 packaging the real-time location information and road surface image information of the driving vehicle "A";
a data transmission/reception unit 140 transmitting the packaged road surface information "d" to the central management server 200 and receiving the real-time road surface condition information from the central management server 200; and
a display unit 150 visually outputting the real-time road surface condition information.

3. The system of claim 1, wherein the vehicle-attached device 100 includes a drive control unit 160 controlling driving information of the vehicle "A" based on the real-time location information, based on the road surface condition information received from the central management server 200.

4. The system of claim 1, wherein the central management server 200 includes

a feature vector extraction unit 210 extracting a feature vector based on the transmitted real-time road surface information "d,"
a road surface condition determination unit 220 determining the road surface condition by extracting the real-time feature vector extracted by the feature vector extraction unit 210 and a feature vector of a dry road surface, a wet road surface, an iced road surface, or a snowy road surface, stored in a database "D," and calculating similarity between the feature vectors, and
a communication unit 240 transmitting the determined real-time road surface condition information to the vehicle "A" and receiving the road surface information "d" from the driving vehicle "A."

5. The system of claim 4, wherein the road surface condition determination unit 220 determines the road surface condition based on a predetermined length L by determining a local road surface condition in units of 1 m or less, and verifying validity of the accumulated local road surface conditions for the predetermined length L.

6. The system of claim 5, wherein the road surface condition determination unit 220 verifies the validity based on reliability of the road surface information "d" received from the plurality of vehicles "A."

7. The system of claim 4, wherein the central management server 200 further includes an image conversion unit 230 converting the determined real-time road surface condition information to be displayed as image information on a driving route map.

8. A control method using road surface recognition of a driving vehicle, the method comprising:

transmitting road surface information (S10) of transmitting, by a vehicle-attached device 100, road surface information "d" including the real-time location information and road surface image information of a driving vehicle "A" to a central management server 200;
determining a road surface condition (S20) of determining, by the central management server 200, the road surface condition in real time based on the road surface information "d";
transmitting the road surface condition (S30) of transmitting, by the central management server 200, the determined road surface condition information to the vehicle-attached device 100.

9. The method of claim 8, wherein the transmitting of the road surface information (S10) includes

continuously capturing, by the vehicle-attached device 100, the road surface image information and recognizing the location information (S11), and
packaging, by the vehicle-attached device 100, the real-time location information and road surface image information of the driving vehicle "A" (S12), and
transmitting, by the vehicle-attached device 100, the packaged road surface information "d" to the central management server 200 (S13).

10. The method of claim 8, wherein the determining of the road surface condition (S20) includes

extracting, by the central management server 200, a feature vector based on the received real-time road surface information "d" (S21),
determining, by the central management server 200, the road surface condition by calculating similarity between the extracted real-time feature vector and a feature vector of a dry road surface, a wet road surface, a iced road surface, or a snowy road surface, stored in a database "D" (S22), and
converting, by the central management server 200, the determined real-time road surface condition information to be displayed as image information on a driving route map (S24).

11. The method of claim 8, further comprising comprising controlling driving (S40) of controlling, by the vehicle-attached device 100, driving information of the vehicle "A" based on the real-time location information, based on the received road surface condition information after the transmitting of the road surface condition (S30).

Fig. 1

CS

DATABASE (D)

CENTRAL MANAGEMENT
SERVER (200)

COMMUNICATION
NETWORK

100

A

110

Fig. 2

【FIG. 3】

VEHICLE-ATTACHED DEVICE(100)

Fig. 4

DATABASE(D)

CENTRAL MANAGEMENT
SERVER (200)

COMMUNICATION
UNIT (240)

FEATURE VECTOR EXTRACTION
UNIT (210)

ROAD SURFACE CONDITION
DETERMINATION UNIT (220)

ROAD SURFACE CONDITION
VERIFICATION UNIT (250)

IMAGE CONVERSION UNIT(230)

ROAD SURFACE RECOGNITION (d)

COMMUNICATION
NETWORK

ROAD SURFACE CONDITION
INFORMATION

VEHICLE-ATTACHED
DEVICE (100)

【FIG. 5】

(a)

POLARIZED          ORIGINAL

(b)

Fig. 6

0                                                                255

(a)

0        ICED ROAD        WET ROAD        DRY ROAD        SNOWY ROAD        255
         SURFACE          SURFACE         SURFACE          SURFACE

(b)

Fig. 7

Fig. 8

M

S10

TRANSMIT ROAD SURFACE INFORMATION

CAPTURE ROAD SURFACE
IMAGE INFORMATION(S11)

PACKAGE ROAD SURFACE
INFORMATION(S12)

TRANSMIT ROAD SURFACE
INFORMATION(S13)

S20

DETERMINE ROAD SURFACE CONDITION

EXTRACT FEATURE VECTOR(S21)

DETERMINE ROAD SURFACE
CONDITION(S22)

VERIFY ROAD SURFACE
CONDITION(S23)

CONVERT ROAD SURFACE CONDITION
AS IMAGE INFORMATION(S24)

S30

TRANSMIT ROAD SURFACE CONDITION

S40

CONTROL DRIVING

## INTERNATIONAL SEARCH REPORT

| International application No. |
| --- |
| **PCT/KR2023/000732** |

**A. CLASSIFICATION OF SUBJECT MATTER**

**B60W 40/06**(2006.01)i; **B60W 40/10**(2006.01)i; **B60W 50/14**(2012.01)i; **G06V 20/56**(2022.01)i; **B60R 11/04**(2006.01)i; **G08C 17/02**(2006.01)i; **G08G 1/0967**(2006.01)i; **B60W 50/00**(2006.01)i

According to International Patent Classification (IPC) or to both national classification and IPC

**B. FIELDS SEARCHED**

Minimum documentation searched (classification system followed by classification symbols)

B60W 40/06(2006.01); B60K 31/00(2006.01); B60W 40/10(2006.01); B60W 50/00(2006.01); B60W 50/14(2012.01); G01W 1/02(2006.01); G07C 5/00(2006.01); G08G 1/0962(2006.01); G08G 1/0968(2006.01); G08G 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 노면(road surface), 상태(condition), 서버(server), 디스플레이(display), 특징 벡터(feature vector)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2014-0119471 A (HYUNDAI MNSOFT, INC.) 10 October 2014 (2014-10-10) See paragraphs [0025], [0031] and [0033]-[0040] and figures 1f-3. | 1,2,8,9 |
| Y | | 3-7,10,11 |
| Y | JP 2006-024104 A (HONDA MOTOR CO., LTD.) 26 January 2006 (2006-01-26) See paragraph [0006]. | 3,11 |
| Y | KR 10-1936769 B1 (KOREA INSTITUTE OF CIVIL ENGINEERING AND BUILDING TECHNOLOGY) 11 January 2019 (2019-01-11) See paragraphs [0041], [0051] and [0063] and figure 4. | 4-7,10 |
| A | US 2017-0297580 A1 (BRIDGESTONE CORPORATION) 19 October 2017 (2017-10-19) See paragraphs [0017]-[0021] and figure 1. | 1-11 |

☑ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **10 April 2023** | **10 April 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/000732**

**C.      DOCUMENTS CONSIDERED TO BE RELEVANT**

| Category* | Citation of document, with indication, where appropriate, of the relevant passages | Relevant to claim No. |
|---|---|---|
| A | US 2019-0329788 A1 (TENCENT TECHNOLOGY (SHENZHEN) COMPANY LIMITED) 31 October 2019 (2019-10-31)<br>See claim 1. | 1-11 |
| PX | KR 10-2414233 B1 (S.R.D KOREA CO., LTD.) 29 June 2022 (2022-06-29)<br>See claims 1, 3 and 5-11.<br>*This document is a published earlier application that serves as a basis for claiming priority of the present international application. | 1-11 |

Form PCT/ISA/210 (second sheet) (July 2022)

**INTERNATIONAL SEARCH REPORT**
Information on patent family members

| | International application No. |
|---|---|
| | **PCT/KR2023/000732** |

| Patent document cited in search report | | | Publication date (day/month/year) | Patent family member(s) | | | Publication date (day/month/year) |
|---|---|---|---|---|---|---|---|
| KR | 10-2014-0119471 | A | 10 October 2014 | None | | | |
| JP | 2006-024104 | A | 26 January 2006 | None | | | |
| KR | 10-1936769 | B1 | 11 January 2019 | None | | | |
| US | 2017-0297580 | A1 | 19 October 2017 | CN | 107003429 | A | 01 August 2017 |
| | | | | CN | 107003429 | B | 28 February 2020 |
| | | | | EP | 3206056 | A1 | 16 August 2017 |
| | | | | EP | 3206056 | A4 | 27 September 2017 |
| | | | | EP | 3206056 | B1 | 23 January 2019 |
| | | | | JP | 2016-075575 | A | 12 May 2016 |
| | | | | JP | 6408852 | B2 | 17 October 2018 |
| | | | | US | 10377385 | B2 | 13 August 2019 |
| | | | | WO | 2016-056569 | A1 | 14 April 2016 |
| US | 2019-0329788 | A1 | 31 October 2019 | CN | 108734955 | A | 02 November 2018 |
| | | | | CN | 108734955 | B | 11 June 2021 |
| | | | | US | 11305780 | B2 | 19 April 2022 |
| | | | | WO | 2018-188462 | A1 | 18 October 2018 |
| KR | 10-2414233 | B1 | 29 June 2022 | None | | | |

Form PCT/ISA/210 (patent family annex) (July 2022)

**REFERENCES CITED IN THE DESCRIPTION**

**Patent documents cited in the description**

- KR 1020090022127

- JP 2018025528 A